Europäisches Patentamt

(19) European Patent Office

Office européen des brevets

(11) Publication number: **0 140 863**
**B1**

(12) **EUROPEAN PATENT SPECIFICATION**

(45) Date of publication of patent specification: **13.01.88**

(51) Int. Cl.<sup>4</sup>: **B 60 T 8/64**

(21) Application number: **84850333.0**

(22) Date of filing: **29.10.84**

(54) Braking force modulator.

(30) Priority: **31.10.83 SE 8305976**

(43) Date of publication of application:
**08.05.85 Bulletin 85/19**

(45) Publication of the grant of the patent:
**13.01.88 Bulletin 88/02**

(84) Designated Contracting States:
**BE DE FR GB IT NL SE**

(56) References cited:
**CH-A- 353 627**
**CH-A- 360 591**
**DE-A-2 146 079**
**SE-A- 369 760**
**US-A-1 488 528**
**US-A-3 067 728**
**US-A-4 354 715**

(73) Proprietor: **Blomberg, Folke Ivar**
**Duvstigen 4**
**S-181 40 Lidingö (SE)**

(73) Proprietor: **Martin, Holst Jan-Olov**
**Skogsduvevägen 14**
**S-752 52 Uppsala (SE)**

(72) Inventor: **Blomberg, Folke Ivar**
**Duvstigen 4**
**S-181 40 Lidingö (SE)**
Inventor: **Martin, Holst Jan-Olov**
**Skogsduvevägen 14**
**S-752 52 Uppsala (SE)**

(74) Representative: **Bjellman, Lennart Olov Henrik**
**et al**
**DR. LUDWIG BRANN PATENTBYRA AB**
**Drottninggatan 7 Box 1344**
**S-751 43 Uppsala (SE)**

Courier Press, Leamington Spa, England.

# Description

The present invention relates to a braking force modulator adapted to be inserted into brake fluid conduits in vehicles equipped with hydraulic brakes to form, together with suitable systems for sensing the rotational state of the vehicle wheels, a complete system to prevent wheel-locking during application of the brakes beyond a limit corresponding to the actually existing state of friction between vehicle wheel and road surface.

Basically, complete so-called "anti-lock" or "anti-skid" systems of this type operate in such a way that when the system supervising the state of rotation of the vehicle wheel (the wheel sensor) during braking detects a tendency of the wheel to be retarded beyond a certain established limit, the modulator immediately blocks additional accumulation of hydraulic pressure in the wheel brake cylinder in question, whereafter the modulator in some way evacuates hydraulic oil or fluid from the wheel brake cylinder so that the braking moment is reduced. The retardation of the vehicle wheel is reduced and the tendency of the wheel to lock changes over into an acceleration of the wheel which removes this tendency. When the vehicle wheel has achieved a speed approaching the speed which a non-braked wheel would have at the actual vehicle speed, the wheel sensor takes a new decision which may be an order to the modulator again to increase the hydraulic oil pressure or to maintain it on a constant level.

As the present invention is only concerned with a braking pressure modulator there is no reason to deal in greater detail with wheel sensors which are available in many known constructions, both mechanic and electronic, representing different control philosophies. Some of these sensors emit only two orders: either to stop additional pressure accumulation and to lower the braking force or again to increase the braking force; as indicated before, there are also wheel sensors which in addition to the two orders mentioned above also supply an order to maintain the braking force at a constant level.

As the present specification is concerned with a modulator for hydraulic braking systems the expressions "braking force" and "breaking moment" used above are substantially synonymous with hydraulic oil or braking oil pressure in a wheel brake cylinder, because the braking moment in a hydraulic brake essentially is directly proportional to the hydraulic oil pressure applied. In this specification the expression "brake fluid" ordinarily used by the experts in the field is used irrespective of the kind of hydraulic fluid actually used.

It will appear from the above considerations that a universally useful modulator, i.e. a modulator which can be used in combination with any wheel sensor known so far, must comply with the requirement to be able to receive and carry out four orders, namely:

1. Bar pressure accumulation in the wheel brake cylinder.

2. Reduce the pressure in the wheel brake cylinder.

3. Increase again the pressure in the wheel brake cylinder.

4. Maintain the pressure in the wheel brake cylinder at a constant level.

The patent literature contains a great number of specifications of braking modulators, some of which only can receive and perform the first three of the above indicated orders. In addition to being complicated, sensitive to disturbances and expensive they have a common dominating drawback: they are difficult to bleed. They contain solenoid valves and "by-pass" ducts in which air can be trapped so that it cannot be removed by the bleeding principle well-known to the experts and practised for many decades, namely simply to open a bleed nipple on the wheel brake cylinders. Bleed nipples must also be provided on the modulator. In certain cases an exact procedure must be followed which often requires actuation of solenoid valves during certain phases of the bleeding procedure. In addition to the fact that such bleeding procedures are extremely incommodious as far as service is concerned, deficient bleeding in certain of the previously known modulators involves a direct danger due to the fact that, if the prescribed bleeding procedure is not minutely followed, air may be trapped within the modulator which does not interfere with the normal function of the brake. The mechanism or servicing hand will have bled the brake system until the "pedal sponginess" characteristic of a badly bled brake system has been eliminated. This may mean that when the vehicle is involved in a situation requiring the modulator to come into action, the modulator is inoperative due to the trapped air and there are even examples of modulators which when actuated while air is trapped therein release this air into the normal braking system causing even this system to become inoperative.

Thus it is a reasonable requirement regarding a modulator that it may be bled without additional measures according to the established procedure simply involving an opening of the "ordinary" bleed nipple in the wheel brake cylinder.

Only two modulators are described in the patent literature which at least to some extent fulfil this requirement, namely a modulator according to Swedish Patent No. 75 01883-8 (SE—A—392 435), corresponding to the preamble of claim 1, and one modulator according to US Patent No. 4.138.165.

Briefly, the first of these modulators may be described as a conventional piston pump, the piston of which is oscillated by means of an eccentric driven by an electric motor, this piston pump being provided with two spring-biased check valves one of which serves as an inlet valve and the other as an outlet valve. Normally these check valves are held open by a coiled spring permitting braking oil freely to pass through the modulator in both directions during normal braking. Disposed between the two check valves is a solenoid magnet which upon energization is able to overcome the force of the previously mentioned coiled spring which normally holds the two check valves open. When this solenoid magnet is actuated the two check valves are closed and when the piston-moving mechanism starts, the pump starts pumping braking oil from the wheel cylinder back to the braking oil pressure generator, ordinarily a foot-operated cylinder with a piston which generally is provided with a so-called vacuum servo mechanism reinforcing the power exerted by the foot of the operator. This happens when the wheel sensor emits the order to reduce the braking oil pressure in the wheel braking cylinder. When the current supply to the solenoid magnet is interrupted, the two check valves are opened again, permitting braking oil to flow from the oil pressure generator through the modulator and to the wheel braking cylinder, thus causing the pressure therein again to be increased. This happens when the wheel sensor emits the order again to increase the pressure in the wheel braking cylinder.

The modulator according to Swedish Patent No. 75 01883-8 (SE—A—392 435) is a fundamentally simple device which obviously may be manufactured at a reasonable cost and which at first sight appears to satisfy all requirements to be met by a braking modulator for hydraulic vehicle brakes, such as the requirements regarding simple bleedin as discussed above.

However, upon closer analysis, this modulator appears to exhibit a number of drawbacks of such a kind that it cannot satisfy the requirements which a braking modulator today must meet.

The most important of these drawbacks will be analysed in the following seven sections.

1. Bleeding of the brakes is not free from problems as previously indicated by the choice of the words "at least to some extent fulfil this requirement". Due to the fact that the two check valves are opened and closed by one and the same solenoid device, a valve chamber must be provided which by means of a duct is connected to the space above the pump piston. When bleeding is performed braking oil mixed with air bubbles flows through the valve chamber but not through the space above the piston, which thus will have to be bled by means of braking oil flowing under the action of gravity downwardly through the duct connecting the two spaces. The duct must be rather wide if the air in the space above the piston really shall pass upwardly through the duct to the valve chamber to be discharged therefrom during the bleeding procedure and to leave the modulator. If the duct is too narrow, air bubbles due to the high surface tension of the braking oil may prevent the air from leaving the space above the piston. Obviously, the bleeding of the modulator according to Swedish Patent No. 75 01883-8 (SE—A—392 435) is problematic.

2. From Section (1) it appears that in order to enable the modulator to be bled at all it must be oriented in a certain way, to wit so that the valve chamber substantially is disposed straight above the space overlying the piston. This condition is difficult to realize in respect to the narrow spaces disposable in modern vehicles.

3. The duct mentioned in Section (1) and connecting the valve chamber and the space above the piston forms an inconvenient dead volume which may imperil the function of the pump. Braking oils have a considerable elasticity which in pumps having so small stroke volumes in relation to unavoidable dead volumes, as in the present case, has a destructive effect on the ability of the pump to produce large pressure differentials.

4. A single solenoid operating two check valves must be disposed between them which means that the valve forming the outlet valve of the pump and facing the pressure-producing mechanism of the braking system must be operated by the solenoid by means of a pin passing through the valve seat. The effective flow area of the valve then amounts to the difference between the cross-sectional areas of the valve seat and the operating pin. The braking oil pressure differential operates against the cross-sectional area of this pin, but the area does not contribute to the flow area of the valve. Even if a pin is used having a diameter as small as 1.5 mm, this means, at a pressure differential of 150 bar a force of 27 N. When the valve is opened this force means a net loss and constitutes an additional requirement on the solenoid which will be large and accordingly slow.

5. As the two check valves are operated by a single solenoid the modulator cannot receive and execute the last one of the four types of orders mentioned previously. This requires that the two check valves may be operated independently of each other. Theoretically this order "hold the pressure in the wheel braking cylinder at a constant level" might be carried into effect by holding the solenoid energized and thereby the check valves closed and stopping the motor. In reality, however, this is not a way to be followed because the kinetic energy stored in the motor will hold the motor moving some time in spite of the fact that the current supply has been interrupted. There are established methods to shorten the deceleration time of motors subsequent to current interruption, e.g. by short-circuiting the motor causing it to switch-over to generator-action producing a braking moment. It is also possible, after having interrupted the current, to transmit a short current pulse "rearwardly" through the motor in order to bring it to a standstill. The motor may also be braked by a spring-biased brake which by means of a solenoid is held released by the same current which is fed into the motor. This last-mentioned measure may be combined with those mentioned previously. However, these measures are not sufficient in order to produce the required short reaction times.

To bring about a quick response to orders emitted from the wheel sensor, the motor preferably should be in action during the complete period of time in which the system comprising the wheel sensor and the modulator is controlling a braking sequence. The reason therefore will appear from the description of the present invention to be given further down.

6. The braking modulator according to Swedish Patent No. 75 01883-8 (SE—A—392 435) is lacking means enabling the sensor order "increase again the pressure in the wheel brake cylinder" to be executed in a controlled way. When the solenoid opens the two check valves, the hydraulic oil pressure will be immediately increased. This produces considerable problems as far as control technique is concerned, and the system would act jerkily while the heavy applications of braking oil pressure would expose the wheel suspension structure of the vehicle to violent loads. To operate in a satisfactory way, the modulator must be complemented by means enabling the pressure increase derivate to be controlled. A number of such devices are specified in Swedish Patent No. 76 05863-5 (SE—A—409 015).

7. Practical tests have shown that, without interference into the normal function of the braking system, very powerful restrictions may be inserted into the braking oil conduits. Thus, it would be possible to give the two check valves a very small cross-sectional area which would mean small requirements regarding the operating power the solenoid which thus could become small, economic in current consumption and quick.

This is opposed by the requirement regarding a considerably larger cross-sectional surface enabling the check valves to operate as efficient inlet and outlet valves respectively during pumping.

It has been found that braking systems even for heavy passenger cars permit restrictions in the form of openings having a diameter not even amounting to 1 mm, 0.7 mm being common and a still lower valve possible for smaller cars. A hole having a diameter of 0.7 mm has a surface of 0.38 mm².

The maximum braking oil pressures in modern braking systems are never lower than 120 bar, 150 bar being an ordinary value and the maximum pressure in extreme cases amounting to 200 bar and more. 150 bar yields on a cross-sectional surface of 0.38 mm² a force of 5.7 N which is a force which rather easily can be brought about by a rather small solenoid.

Opposed to this is the fact, established by practical tests, that the pump in order to reach a good pumping effect and a reasonable efficiency, requires much larger valves. For normal passenger cars the requirement as far as the valve diameters are concerned is a diameter of at least 3 mm and preferably 4 to 5 mm. A braking oil pressure differential of 150 bar yields in valves of a diameter of 3 mm a force exceeding 100 N. It is not possible to produce this force with reasonably large solenoids, and this the less as, at the same time, extremely short reaction times must be required.

From the above explanation it will appear that a person trying to construct a serviceable modulator according to Swedish Patent No. 75 01883-8 (SE—A—392 435) will be forced to find a compromise between the two quite incompatible requirements explained above regarding the diameters of the check valves, which will be a difficult or almost impossible task.

The modulator according to US Patent No. 4.138.165 has the same deficiencies as those explained in Sections 1—7 in connection with the modulator according to Swedish Patent No. 75 01883-8 (SE—A—392 435) with the exception of Sections 6 and 7.

These two deficiencies have been eliminated according to the US Patent by constructing the two check valves as double valves. Such a valve comprises a relatively large valve disk in which a smaller valve is provided. When the modulator is not in action, both the large and small valves are held open. When the modulator is conditioned to obstruct continued passage of braking oil, both the large and smaller valves are closed and during renewed pumping the large valves act as inlet and outlet valves.

When the braking oil pressure is to be restored, the return spring of the magnet core is not able to open the two large valves due to the pressure differential produced. In contrast thereto the two small valves are opened and the angular surface forming the area difference between the central hole in the large valves and the shaft of the small valves extending therethrough constitutes the restriction required for a soft, controlled re-application of the brake. When the hydraulic oil pressure across the modulator has been equalized substantially completely, also the large valves are opened.

It will be seen that the two deficiencies according to Sections 6 and 7 above have been eliminated, at least theoretically.

Sufficiently large pumping valves have been obtained as well as a controlled restriction of the braking oil flow upon renewed application of the brake.

However, attempts to develop modulators according to this US Patent have shown that the construction comprises a large amount of small, very intricate detail parts which must be manufactured at prohibitively small tolerances. In addition, they have to be measured apart in classes for selection mounting. The fact that both the inlet and outlet check valves are operated by a single intermediary magnet core, yields very comprehensive and difficult tolerance chains.

In addition, it has been shown in practice that in spite of very exact manufacture of the detail parts and thorough selection-mounting the device had to be dismantled and details had to be exchanged several times prior to achieving proper function.

Practical tests designed to find a suitable restriction area for the braking oil upon renewed application of the brake during a controlled braking process, have shown that the restriction area should be very small. This means that the gap between the shaft of the small valve and the hole in the large valve will be so small that there is an obvious risk that the gap will be reduced after some time due to oxides, depositions and dirt causing the restriction area to be diminished and the function of the modulator to be endangered. If the restriction area will be sufficiently small, the brake is re-applied so slowly that the braking distances are extended during a controlled braking process. The consequences would be completely disastrous if the gap were entirely clogged.

On the basis of the above remarks and after having studied the drawings belonging to US Patent No. 4.138.165 the expert will realize that this patent does not form an acceptable starting point for developing a reliable and sufficiently cheap product suitable for mass production.

The solution according to the present invention, which is disclosed in the characterising part of claim 1, overcomes all the faults and deficiencies discussed above in known braking modulators for hydraulic vehicle brakes.

Some presently preferred embodiments according to the inention will be described hereafter with reference to the enclosed drawings in which:

Figure 1 is an end view of a unit in accordance with a presently preferred embodiment of the invention,

Figure 2 is a longitudinal section of the unit according to Fig. 1 taken along line I—I in Fig. 1,

Figure 3 is a section taken along line II—II in Fig. 1 of the two solenoid valves belonging to a braking circuit,

Figure 4 shows an enlarged portion of the upper solenoid valve of Figs. 1 and 3,

Figures 5 to 7 are cross-sectional views taken along lines III—III, IV—IV and V—V in Fig. 4 of certain details,

Figure 8 is a perspective view of the unit according to the Figs. 1 to 7,

Figures 9 to 11 show modified arrangements of the unit according to the invention with a greater number of braking circuits than the two appearing in the unit according to Figs. 1 to 8. The units according to Figs. 9 and 10 comprise four circuits and the unit according to Fig. 11 comprises three circuits,

Figure 12 is a circuit diagram of the unit according to Figs. 1 to 8 when inserted into a complete braking system for a wheel brake,

Figure 13 is an amperage-time diagram for solenoid operating circuits, and

Figure 14 illustrates an alternative embodiment of the valve arrangement according to Figs. 3 and 4.

As appears from Fig. 12 the unit is inserted into the normal hydraulic conduit 2 in a conventional hydraulic braking system between the braking oil pressure generator 3, shown in Fig. 12 as a conventional master cylinder with vacuum amplifier, and a brake 4 comprising a braking yoke with a braking cylinder 5 and a braking disk 6. The unit or braking modulator 1 is a device enabling all the four initially mentioned orders to be executed, which means that it can inhibit the braking oil flow from the pressure generator 3 to the braking cylinder 5 and hold it at a constant level therein, and can pump braking oil from the braking cylinder 5 towards the pressure generator 3 and finally in a controlled way again permit the braking oil to flow from the pressure generator 3 towards the braking cylinder 5. The modulator 1 may be constructed so as to handle one or several wheel brakes. The system also comprises a sensor device for sensing the state of rotation of the vehicle wheel, said device in the initial phase of a wheel-lock emitting a signal to unit 1 to stop accumulation of braking pressure or to release the braking pressure applied. The sensor system is schematically indicated in Fig. 12 and comprises a transmitter 7, a control box 8 and a current source 9, normally the battery of the vehicle, as well as a number of electric conduits indicated by broken lines.

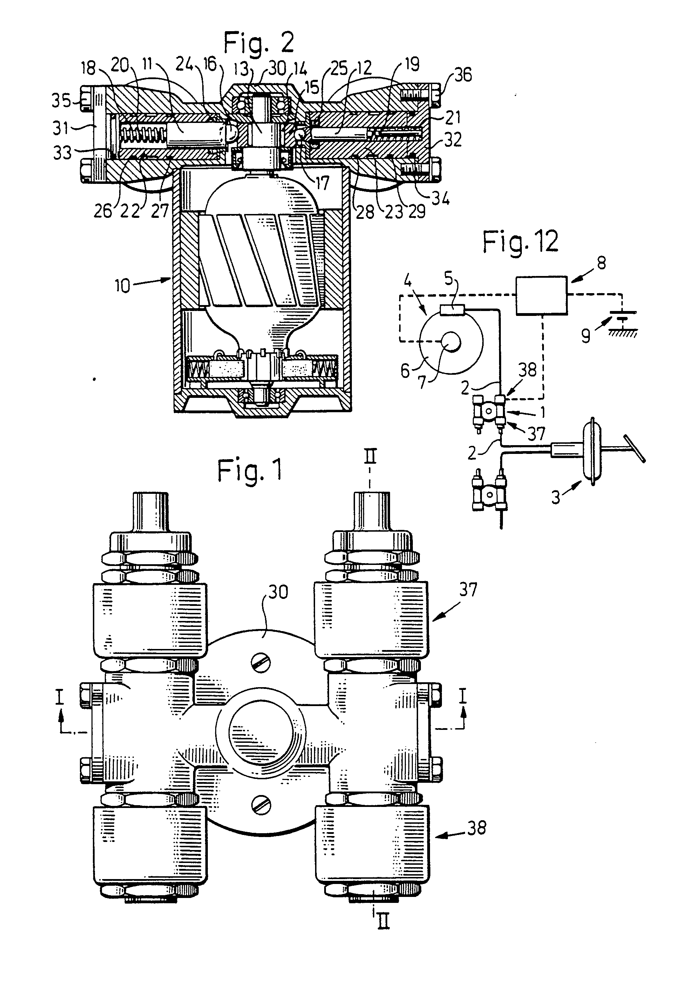

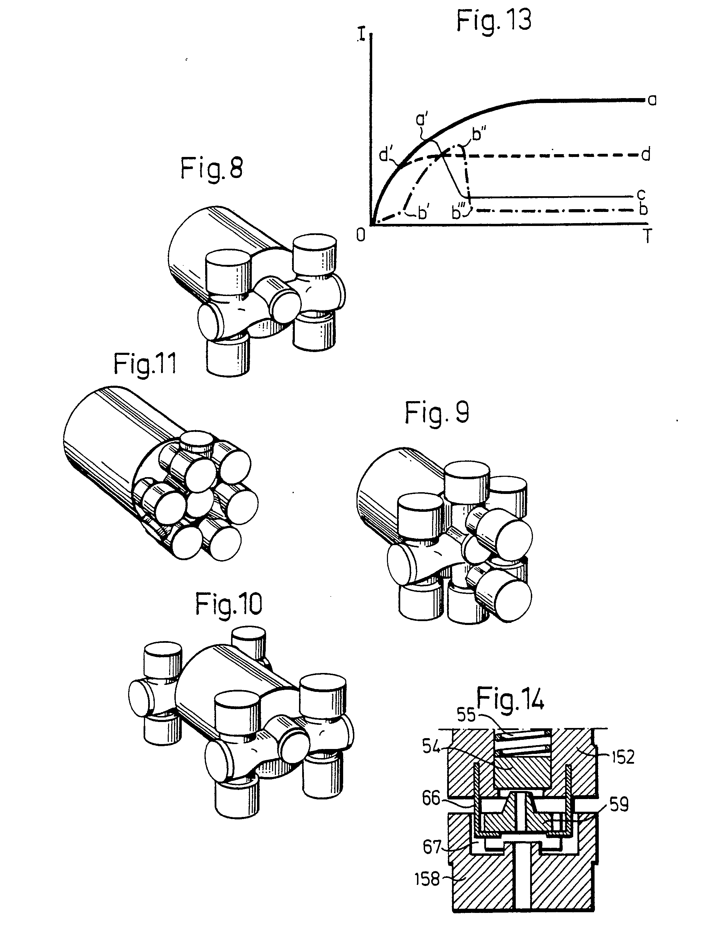

Fig. 12 represents one modulator 1 adapted to control two wheel brakes provided that these do not comprise more than one braking cylinder. The same applies to the modulators according to Figs. 1, 2 and 8. A vehicle having four wheels with brakes comprising one braking cylinder thus requires, for individual control of the brakes, two modulators according to Figs. 1, 2 and 8 or one modulator having four circuits. Examples of such modulators are shown in Figs. 9 and 10. As shall be shown further down, the rear brakes on conventional passenger cars have a very small braking effect compared with the forward brakes; accordingly, the rear brakes sometimes form a single braking circuit controlled by the same modulator circuit. In these cases one sensor system 7, 8 is often provided for each rear wheel and the sensor system, sensoring the state of rotation of the wheel which at the moment is rolling over the worst road surface, is permitted also to control the brake of the other rear wheel. This controlling philosophy is conventionally termed "sense-low". It is also possible to let both braking circuits be controlled by one single sensor system 7, 8 the transmitter of which is driven by the cardan shaft, and which thus sensors mean values for the state of rotation of both wheels. It is known that for many years the hydraulic systems for vehicle brakes for the sake of security have been subdivided into two circuits, the pressure generator 3 generally comprising a so-called tandem master cylinder. In one example of such subdivision the one circuit of the tandem master cylinder comprises the forward wheel brakes and its other circuit the rear wheel brakes. In an other embodiment the one circuit comprises the right-side forward brake and the left-side rear brake and the other circuit comprises the left-side forward brake and the right-side rear brake. Other subdivisions are possible.

In order to achieve increased security when one of the circuits of the tandem master cylinder drops out, certain vehicles are provided with wheel brakes having two braking cylinders. These brakes are ordinarily disc brakes, but also drum brakes have been provided with two braking cylinders. If a four-wheel vehicle has double brake cylinders in all the brakes, individual control of all the wheel brakes requires eight modulator circuits which means four modulators according to Figs. 1, 2 and 8 or two modulators according to Figs. 9 and 10. However, such arrangements are uncommon. In contrast, it is a common arrangement that the forward brakes have double braking cylinders whereas the rear brakes only have a single one. In this case six modulator circuits are required which, for example, can be achieved with the aid of two modulators according to Fig. 11, three modulators according to Figs. 1, 2 and 8 or according any of Figs. 9 or 10 plus a single one according to Fig. 1, 2 and 8. In such arrangements the one braking cylinder in the forward brakes is connected to the circuit of one of the tandem master cylinders and the other braking cylinder to the other.

If in the above described arrangements several modulators are applied, it will also be possible to achieve a considerable security against a dropout of any of the modulator motors 10.

While many arrangements different from those described here are imaginable, the expert will realize that it is possible to provide modulators according to the present invention which are suitable for every imaginable system for subdividing the hydraulic system in hydraulic vehicle brakes.

Modulators according to the present invention in agreement with the modulators according to Swedish Patent No. 75 01883-8 (SE—A—392 435) and US Patent 4.138.165, as initially briefly described, may be defined as a unit comprising one or several piston pumps, the pistons of which are oscillated by an eccentric driven by an electric motor and the inlet and outlet valves of which are spring-biased check valves which normally are held open but which upon actuation for reverse pumping of brake oil from the braking cylinder 5 to the pressure generator 3 may be closed by electromagnetic means so that pumping can be performed.

The modulator according to the present invention is distinguished from the modulator according to the above-mentioned patents by features which are of particularly decisive importance for the ability of the modulator to operate reliably at high control frequencies and at a moderate current consumption as well as for the modulator's ability to be manufactured in large series at reasonable cost.

However, the most essential difference exists in the check valve arrangement which is basically distinguished from the modulators according to the previously mentioned Swedish and US Patents by the fact that in these known constructions the two check valves are operated by one single solenoid whereas the modulator according to the present invention has a solenoid for each check valve whereby a number of advantages are obtained.

As the valves do not need to be located according to a common line, they may be positioned arbitrarily in relation to each other which means that a straight through-flow duct can be formed without pockets and dead-end spaces which render ventilation difficult. Moreover, due to the separate valves improved possibilities are obtained to achieve small and compact modulators for many braking circuits. Moreover, the solenoids on both valves in the same circuit may be placed on the same side of the valve seats as the valves, which means that it is possible to avoid the dead through flow area which an operating pin extending through a valve seat will create, which means that the requirements regarding the operating forces of the solenoids will be moderate so that the solenoids may be built smaller and thereby become faster. By providing two separate solenoids in place of one common solenoid for the two check valves, an additional decrease of the operating forces of the solenoid is obtained. By placing the solenoids on the same side of the valve seat, simple possibilities are opened to construct the valves themselves as two-step valves, whereby by additional decrease of the operating forces of the solenoids is obtained; finally, the arrangements comprising separate valve units means that the device responsible for the necessary restriction of the brake oil flow upon renewed application of the brakes after a down pumping face can be separated from the main valves and a separate valve can be arranged performing this function and operated by the same solenoid as the main valves. This means very considerable advantages as far as reliability and a rational and cheap manufacture are concerned.

These and other advantages of the present invention in comparison with e.g. the previously discussed modulators according to Swedish Patent No. 75 01883-8 (SE—A—392 435) and US Patent No. 4.138.165 will be additionally explained in the following detailed description of the structure and function ot the modulator.

The pump section (Fig. 2), defined here of the complete device with the exception of the solenoid-operated check valves, comprises an electric motor 10 on the shaft of which an eccentric 13 is provided which via a needle bearing 14, an eccentric strap 15 and balls 16, 17 causes pistons 11, 12 to oscillate, said pistons being urged inwardly against the eccentric device by springs 18, 19. As a dead-volume filler two bodies 20, 21 are inserted within springs 18, 19. The pistons move in cylinder linings 22, 23 in relation to which they are sealed as by so-called sliding-sleeve gaskets 24, 25 inserted into the cylinder linings. The sealing between the pistons 11, 12 and the cylinder linings 22, 23 may obviously also be performed by sealing elements on the pistons 11, 12 such as O-rings. The cylinder linings 22, 23 are sealed by means of O-rings 26, 27, and 28, 29 respectively in relation to the housing 30. The cylinder linings are retained in the housing 30 by means of covers 31, 32 sealed in relation to the housing 30 by means of O-rings 33, 34. The covers 31, 32 are urged against the housing 30 by screws 35, 36.

One of the differences resides in the fact that balls have been introduced between the pistons and the eccentric, whereby the frictional losses in the pumping section have been reduced endowing the pump with very high efficiency.

In conventional pumps the plane ends of the pistons abut against an eccentric strap, the outer surface of which is fully cylindrical. If the pump only has one piston, the movement between the piston and the eccentric is a pure rolling movement. If the pump has more than one piston, sliding movement occurs between the end surfaces of the pistons resulting in wear and great frictional losses, on the one hand, in the contact surfaces between the pistons and the eccentric and, on the other hand, between the pistons and the cylinders due to the large lateral or guiding forces acting between the pistons and the cylinders.

These drawbacks have been overcome by the construction used according to the present invention. The end of pistons 11, 12 facing the eccentric strap 15 as well as the outer surface of the eccentric strap 15 have been provided with concave, spherical grooves having a slightly greater radius than balls 16, 17 inserted into these grooves between the pistons and the eccentric. The sliding movement between the pistons and the eccentric strap 15 in this way are replaced by a pure rolling movement, and calculations confirmed by practical tests have shown that an improvement in efficiency of an order 40% has been obtained.

The reason why the pistons 11, 12 in Fig. 2 have different diameters is the following: The brakes on one and the same vehicle may have very different dimensions. On a modern passenger car the braking force or the braking moment on the forward wheels is at least three times and often four times as high as on the rear wheels. The reason for this is that the wheel load on the forward wheels is higher than on the rear wheels. The ratio is of the order of 60% forward and 40% rear. Moreover, this difference is increased during braking by what may be called "virtual gravity center shift" or "forward tipping" so that the weight distribution, which for an unbraked vehicle e.g. is 60% forward and 40% rear, is changed to e.g. 80% forward and 20% rear. The brakes, in consideration of these conditions are so constructed that during energetic braking, no risk shall be incurred that the rear wheels lock prior to the forward wheels which, as well-known to the expert, unavoidably means that the rear portion of the car is thrown in a lateral direction causing the driver suddenly to lose control of the vehicle.

This means of course that the amount of braking oil supplied to a forward brake during braking is much greater than the amount supplied to a rear brake on one and the same passenger car.

In the embodiment in which the invention is illustrated in Figs. 1, 2 and 8, two wheel braking circuits may be controlled, the intention being that the circuit containing the larger piston 11 should control a forward wheel and the circuit containing the smaller piston 12 a rear wheel. There are reasons additional to that indicated above for giving different diameters to the pistons in one and the same modulator. For example, it may be advantageous in certain vehicles to arrange one modulator circuit to control two or more wheel brakes and another modulator circuit to control only one wheel brake.

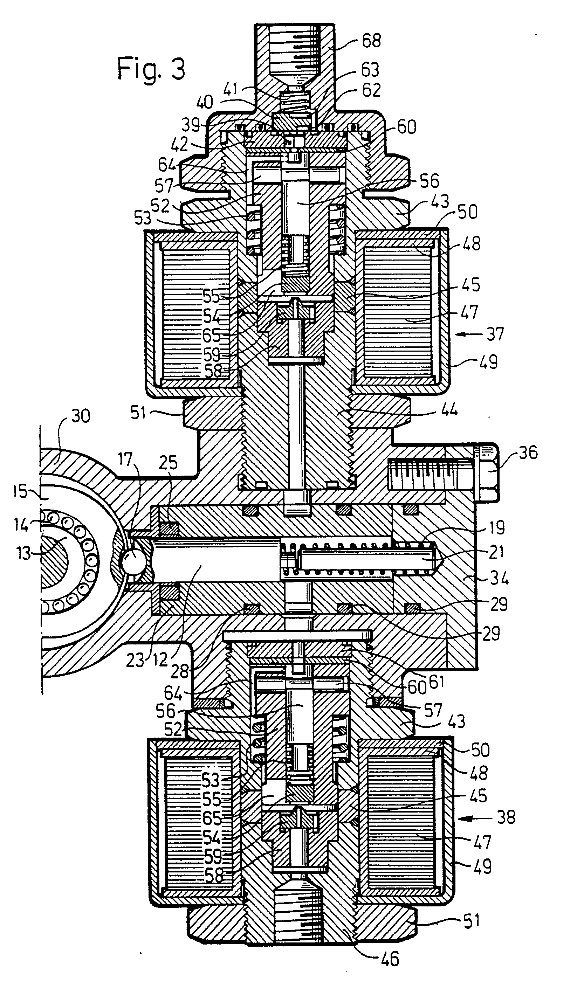

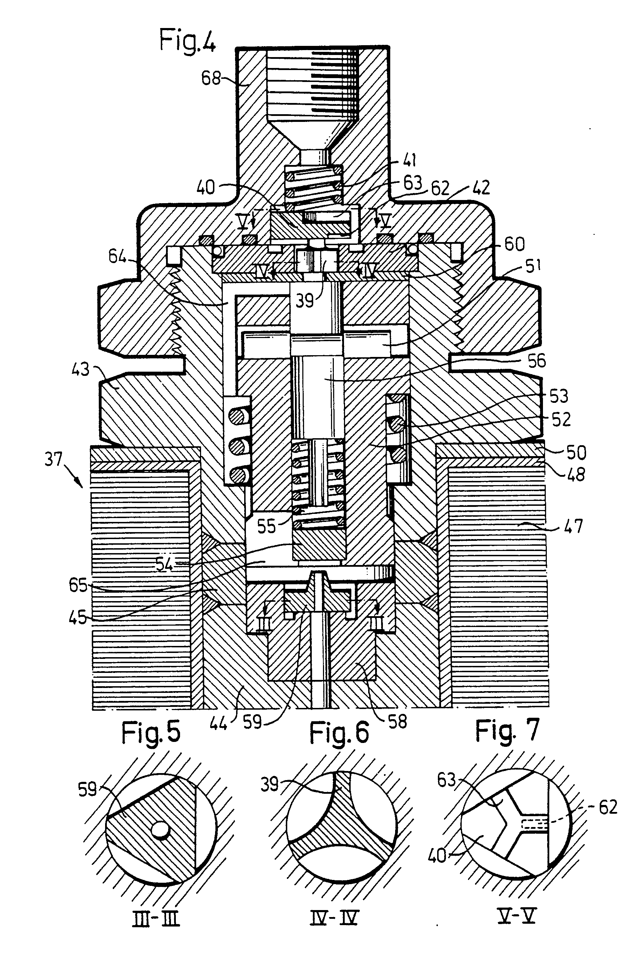

The solenoid valves 37, 38 (compare Figs. 3 and 4) are fully identical apart from the fact that one 37 of the valves in its upper end is provided with the initially described device for restricting the braking flow during renewed application of the brake, this device, hereafter designated as "re-application valve", comprising an operating pin 39, a valve disk 40, a return spring 41 and a valve seat integrated in a support disk 42. The lower valve 38 is not provided with a similar device.

The first portion of the ensuing description refers to the two valves 37, 38 and explains in which respects both are identical as far as construction and function are concerned. At the end of this portion of the specification we shall revert to the re-application valve device in valve 37, mentioned in the preceding paragraph. The same reference designations are used for identical details in both valves 37, 38.

The housing of valve 37 is composed of three parts 43, 44, 45, welded together, two of which, 43, 44 comprise magnetic material, and a spacing piece 45, comprising non-magnetic material. The counter part of part 44 in valve 37 is part 46 in valve 38. The difference between parts 44 and 46 has no functional importance but is only due to the fact that the part 46 is provided with a threaded connecting hole for tube-attachment purposes whereas part 44 is provided with an extended outside thread for screwing insertion of the valve into the modulator housing 30. The valve housing is surrounded by a solenoid 47 wound onto a coil support 48. The solenoid is enclosed by a casing 49 having a cover disk 50 both of magnetic material and is urged towards part 43 of the valve housing by a nut 51. The valve housing encloses a movable core 52 provided with a return spring 53. In the core 52 a valve disk 54 is urged against a shoulder in core 52 by means of a pretensioned spring 55 the other end of which is supported by a spring support 56 which in turn is secured in the core 52 by a centrally reduced tap 57 passing through a hole extending across core 52. An insert 58 comprising a seat for a valve cone 59 is pressure-fitted into respectively part 44 of the valve housing for valve 37 and part 46 for valve 38.

The cores 52 are urged (see Figs. 3 and 4) upwardly under the action of springs 53 against adjusting disks 60 which in turn are supported by a support disk 42 in valve 37 and a similar support disk 61 in valve 38. With the aid of adjusting disk 60 of varying thickness, the stroke length of the cores may be adjusted. The two support disks 61, 42 are distinguished by the fact that the support disk 42 comprises a seat for the re-application valve 40, this seat having no counterpart in support disk 61.

The re-application valve 40, within certain limits, to be explained later, follows the movements of the core 52. The re-application valve 40 is urged by a spring 41 against an operating pin 39 extending through a hole in support disk 42. The operating pin 39 is in turn urged against the core 52 via adjusting disk 60.

When solenoid 47 is not actuated, the re-application valve 40 is lifted off its seat in support disk 42. It is to be noted that the re-application valve 40 on its sealing surface facing the seat in the support disk 42 is provided with a groove 62 (compare Figs. 3, 4 and 7) which means a controlled leakage past the valve when the re-application valve 40 rests against its seat in the support disk 42.

On the upper side of the re-application valve 40 three mutually connected radial grooves 63 are provided serving the function to form a passage for the braking oil when valve 37 is in its normal open position.

On the upper end of the valve a capped nut 68 is screwingly attached, said nut being provided, on the one hand, with a space for the re-application valve 40 and the return spring 41 thereof and, on the other hand with a threaded connection for a braking oil conduit. The capped nut 68 is sealed by O-rings against part 43 of the valve housing and the support disk 42.

As appears from Fig. 12, valve 37 is connected to the pressure generator 3 and valve 38 to the wheel braking cylinder 5.

During normal braking, when the motor 10 and the solenoids 47 in valves 37, 38 are not actuated, all the parts therein occupy the positions shown in Figs. 3 and 4 and braking oil can freely flow from the pressure generator 3 through valve 37 and further through valve 38 to braking cylinder 5.

The following path is taken by the braking oil through valve 37 and into the pumping chamber connected to piston 12. The braking oil passes the re-application valve 40 which is lifted from its seat in the support disk 42 by operating pin 39. The braking oil flows thereafter through the opening between the hole in the support disk 42 and the operating pin 39 (compare Fig. 6) and through the hole in the adusting disk 60 and continues flowing through grooves 64 and 65 provided in core 52 and through the central hole in valve cone 59 which by the pressure differential caused by the flow of the braking oil therethrough is urged against its seat in insert 58. Thereafter the braking oil flows through the pumping chamber adjacent piston 12 and further towards valve 38.

The path taken by the braking oil through valve 38 towards braking cylinder 5 is identical with that described in the preceding paragraph apart from the fact that this valve has no re-application valve arrangement so that the braking oil is only required to pass through the holes in the support disk 61 and adjusting disk 60 to reach the grooves 64 and 65 in core 52.

When the brake is again released and the braking oil thus is to flow from the braking cylinder 5 towards the pressure generator 3, the valve cones 59 are lifted from their seats in inserts 58, putting a large through-flow area at the disposal of the braking oil.

As the expert easily will realize, the system may be bled in a conventional way by means of the bleed nipple in the wheel braking cylinder. The air follows the same way as the braking oil during normal braking, i.e. from the pressure generator 3 through valve 37 and the space above piston 12 and further through valve 38 and from there to the wheel braking cylinder 5 and out into the atmosphere through the bleed nipple thereof, and the braking modulator needs therefore not be provided with bleeding devices and no other routines need to be followed than those which have been applied for decades in connection with conventional hydraulic brakes on motor vehicles. Thus, traditional bleeding routines are followed until the "pedal sponginess" characteristic of a badly ventilated braking system has been eliminated. Thereby also the braking modulator has been sufficiently bled to be able to come into action if needed. This simple and secure bleeding procedure is one of the advantages of the present invention as indicated in the introductory part of this specification.

After having appreciated the way in which the ventilation is performed, it will be obvious that the modulator without disadvantages for the bleeding or the function in other respects can be directed in any position which is an important advantage in modern vehicles where space is limited.

When a tendency towards wheel-locking is detected by the wheel sensor system 7, 8 (Fig. 12) current is supplied to motor 10 and the two solenoids 47 causing the core 52 of valve 37 to move towards insert 58. Hereby the re-application valve 40 in valve 37 is closed already after a movement of core 52 over a small portion of its total stroke length. Immediately thereafter valve disk 54 approaches its seat in valve cone 59, whereafter core 52 continues its movement to the stopped position against insert 58.

Under these circumstances valve disk 54 leaves the insert in core 52 and spring 53 urges valve disk 54 against valve cone 59 which thereby also is urged against its seat in insert 58. The process in valve 38 is identical apart from the fact that this valve lacks the re-application device 39 to 42.

Hereby the valves are conditioned for return-pumping of braking oil from the wheel braking cylinder 5 back to the pressure generator 3, causing the braking oil pressure in the wheel braking cylinder 5 to be diminished and the braking moment to be reduced.

As soon as at least one of the valves 37, 38 has been closed, additional pressure accumulation in wheel braking cylinder 5 is interrupted and when both valves 37, 38 have been closed and motor 10 operates and piston 12 oscillates, a complete piston pump has been obtained in which valve 38 forms the inlet valve through which braking oil is sucked from the braking cylinder 5 when piston 12 moves inwardly towards the motor shaft, and valve 37 forms the outlet valve through which braking oil is pressed out towards the pressure generator 3 when piston 12 moves in the direction away from the motor shaft.

During the pumping process the valve disks 54 move together with the valve cones 59 as a unit. It should be noted that during the pumping process obviously also the re-application valve 40 moves in agreement with the valve disk 54 and the valve cone 59. This means that the relevant pumping valve area is the large surface at the seat in insert 58 and not the area, about twenty times less large, at the top of the valve cone 59. This value "twenty times less" refers to the relative dimensions which on the attached drawings have been given to the hole in valve cone 59 and the valve seat in insert 58 and does not involve a constructive limit but indicates only the ratio which during practical tests appears to be suitable for such hydraulic braking systems as used today. There is scarcely any upper limit. For example a ratio of 100 may be chosen instead.

Of course, the two valves 37 and 38 may change place, provided that their position in relation to the pressure generator 3 and the wheel braking cylinder 5 is maintained.

When the vehicle wheel has recovered from its locking tendency, causing the signal from the sensor system 7, 8 requiring release of the brake to cease, the braking modulator can be caused to execute various orders from the sensor system depending on the construction thereof.

Certain sensor systems emit only one signal, to wit a signal ordering a release of the braking oil pressure and thereby of the braking force. When the signal ceases the braking oil pressure is again to be increased until the pressures on either side of the modulator have been completely equalized or until the sensor emits a new order regarding a reduction of the braking oil pressure.

When the braking modulator is connected to such a sensor system as described in the preceding paragraph, the braking modulator operates in the following way.

The control procedure starts by the emission of an order from the sensor system 7, 8 to reduce the braking force whereby the down pumping process is started as described earlier.

When this sensor signal ceases current supply to both solenoids 47 is interrupted. Also current supply to the motor may be interrupted but this not necessary. This question will be taken up later on.

The return springs 53 then start to reposition the two cores 52 towards the starting or normal position.

During the movement of the cores 52 towards the starting position the valve disks 54 under the action of springs 55 move towards their abutments in cores 52 and are subsequently lifted off their seats in the valve cones 59 to expose the holes extending therethrough. This valve area is very small and moderate forces from the return spring 53 are required also at high braking oil pressure differentials in order to separate valve disk 54 from its seat in valve cone 59.

However, valve cone 59 will remain in pressure contact with its seat in insert 58 due to the hydraulic pressure differential prevailing there.

While this question has been touched-upon in the introductury part, it may be correct to point out also here than the valve area between the valve cone 59 and its seat in insert 58 is so large that even a moderate pressure differential would mean that much force would be required in order to lift the valve cones from their seats. It would require a very powerful spring 53 which in turn would require unreasonably large and thereby slow solenoids 47.

The core 52 in valve 38 is not prevented from continuing its movement to the starting position, i.e. until it is urged by spring 53 via adjusting disk 60 against the support disk 61.

The course of action in valve 37 is the same apart from the fact that core 52 is stopped in its movement towards the starting position due to the fact that the return spring 53 is not able to open the re-application valve 40 because a high pressure differential is prevailing thereover. However, the movement of the core is sufficient to cause the small hole in valve cone 59 to be exposed by valve disk 54.

The consequence is that the valve cone 59 during a braking process controlled by the modulator and the sensor system as a rule never will be lifted from its seat in insert 58. Only exceptionally the hydraulic oil pressure differential over the modulator will become so low during a controlled braking process that this occurs.

Now braking oil may flow from the pressure generator 3 and through both valves 37, 38 towards the wheel braking cylinder. However, due to the fact that the re-application valve 40 is held closed, the braking oil flow will be strongly restricted as the only path to be taken by the braking oil past the re-application valve 40 extends through the previously mentioned groove 62 in the seat surface thereof (see Figs. 3, 4 and 7). In the absence of this restriction control difficulties would be encountered and the pressure increase in the wheel braking cylinder 5 would be so violent that the system would operate in a particularly unpleasant and jerky way, while in addition this powerful pressure application would cause unacceptable loads to act on the wheel suspending means of the vehicle.

If the pressure equalization is permitted to continue until it has been levelled down to some few bar, also the re-application valve 40 will open permitting core 52 in valve 37 fully to return to the starting position under the action of return spring 53, whereafter also valve 37 is fully open.

If an order from the sensor system 7, 8 again to reduce the braking oil pressure should arrive during a pressure restoration or re-application process, solenoids 47 are again supplied with current and the valve systems, springs 55, valve disks 54, valve cones 59 and inserts 58 are again conditioned to perform their check valve function permitting a down pumping phase according to the preceding description to be started.

However, there are more complicated sensor systems which in addition to the previously described down pumping and re-application phases also comprise phases during which a certain braking pressure is held constant. The braking modulator according to the present invention is designed also to execute such orders.

If during a down pumping phase current supply to the solenoid 47 of either valve 37, 38, such as 38, is interrupted the hole in valve cone 59 is exposed. Hereby the operation of the pump is terminated because a heavy leakage has been brought about in its inlet valve. However, the other valve 37 remains closed causing the braking pressure to be frozen.

If the order to hold the pressure constant arrives during the re-application phase, a pressure-holding phase is produced in a similar way. One of valves 37, 38 is supplied with current.

After this description of the various functions of a modulator circuit for a wheel braking cylinder, it will be appreciated that a motor 10 may operate the pistons of several modulator circuits. If for the sake of simplicity the modulator for two wheel braking cylinders illustrated in Figs. 1, 2 and 8 is chosen, it will be seen that the motor will be permitted to run without affecting the pressure in the two wheel braking cylinders provided that none of solenoids 47 in valves 37, 38 is supplied with current in any of the circuits of the modulator. There are simply no pumps because all the valves 37, 38 are open and the fact that the motor 5 is in operation and both pistons 11, 12 are oscillating only results in a slight and quite ineffective fluctuation of the braking oil pressure. Starting from the fact that motor 10 is rotating, arbitrary combinations of the four orders enumerated in the introduction of this specification can be supplied to the two circuits of the modulator. If current is supplied to solenoid 47 in one of the two valves 37, 38 included in the circuit, the accumulation of pressure in the wheel braking cylinder is stopped. If current is supplied to solenoids 47 in both valves 37, 38 a reduction of the braking oil pressure in the wheel braking cylinder is started. If thereafter the current supply to solenoid 47 in either valve 37, 38 is interrupted, the reduction of braking oil pressure is interrupted and the pressure is held constant in the wheel braking cylinder 5. If thereafter the current supply is interrupted to solenoids 47 of both valves 37, 38, a pressure increase in the wheel braking cylinder 5 under the control of the re-application 40 is started.

It may be mentioned that sensor systems sending signals involving orders to hold the braking oil pressure constant, in many cases are so constructed that both the pressure reducing and the pressure re-application phases comprise several interruptions during which the braking oil pressure shall be held on a constant level. The modulator according to the present invention is able also to perform such sensor orders.

By reference to Fig. 14 a modification of the arrangement comprising core 52, valve cone 59 and insert 58 will be described Two of the parts shown in Fig. 14 are slightly different from corresponding parts in other Figures, viz. the core 52 and the insert 58. For this reason these parts in Fig. 14 are designated as 152 and 158 respectively.

The main purpose of the construction according to Fig. 14 is to hold the valve cone 59 lifted away from the seat in insert 158 during normal braking or ventilation when the modulator is not in action. This is performed by means of a number, suitably three, of hook-shaped elements 66 anchored in the core 152 and adapted to be received in recesses 67 provided in insert 158. Thus, during normal braking braking oil can pass in either direction, not only through the central hole in valve cone 59 but also past valve cone 59 and the seat in insert 158. The same applies for braking oil mixed with air during ventilation.

This may be advantageous in certain installations, e.g. in connection with wheel braking cylinders which during braking require very large amounts of braking oil or in connection with pressure generators 3 having very large internal air volumes which have to be pressed through the entire braking circuit when an initially completely empty system is to be filled with braking oil.

However, in normal cases the arrangement according to Fig. 14 is not required.

In Fig. 14 the parts are shown in the relative positions taken when the solenoid 47 is not excited. In this case valve cone 59 is held in a lifted position in insert 158 by means of the hook-shaped elements 66 but not higher than to leave a safe spacing between valve cone 59 and valve disk 54.

As for the rest, the arrangement according to Fig. 14 does not interfere with the function of valves 37, 38. When core 152 is completely pulled against insert 158, the portions of elements 66 which in Fig. 14 are shown to lift valve cone 59 from the seat in insert 158, are positioned completely below this seat and thus exert no function al all. In the re-application position, if a sufficiently high pressure differential is prevailing over valve cone 59, there is the difference that core 152 by elements 66 is prevented to return to "normal position" because valve cone 59 is urged against the seat in insert 158 by the braking pressure differential.

In the basic embodiment in which the construction so far has been described, the core 52 is prevented from returning to "normal position" by the re-application valve 40 and the operating pin 39. In the construction according to Fig. 14 the core 152 is prevented during a re-application phase to return to "normal position" by the valve cone 59 and the hook-shaped elements 66. It will be appreciated that the re-application function has not been changed if instead of the basic embodiment the arrangement shown in Fig. 14 is chosen.

It is another purpose of the construction according to Fig. 14 to reduce the actuation time of core 152 after the re-application phases during a braking process controlled by the modulator, and this is brought about by the fact that the core by the hook-shaped elements 66 is prevented from completely returning to its normal position. This means that the air gap between core 152 and insert 158 during a re-application phase is smaller than if the core 152 is permitted to return completely when current supply to solenoid 47 is interrupted. When subsequently current supply to solenoid 47 is started, core 152 is exposed to a considerably larger magnetic force than if the core 152 had been in its "normal position". In practical embodiments of the modulator according to the present invention, this difference in air gap width amounts to about 30% which is an important difference considering the known fact that the pulling force in a solenoid pulling magnet is substantially inversely proportional to the square of the air gap. With the 30% reduction of the air gap as indicated here almost a doubling of the pulling force is obtained which together with the fact that the distance to be passed by core 152 to reach the fully attracted position also has been shortened by 30%, substantially halves the application time in comparison with the application time when the starting point of core 152 is the "normal position".

As by means of the arrangement according to Fig. 14 fundamentally the central hole in valve cone 59 may be made arbitrarily small, it will be appreciated that these holes may be construed to constitute the necessary restriction during the re-application phase. Thus, it may be possible to desist from details which, as the function of this phase has been described so far, have performed this function, namely the valve seat in the support disk 42, the operating pin 39 and the re-applications valve 40.

Practical considerations, in the first place the clogging risk, however, tell against excessively small holes in valve cone 59. For small and medium large passenger cars the details enumerated in the preceding paragraph must be used in order to take care of the re-application function. For heavy passenger cars and in particular for heavy load-bearing vehicles and buses provided with hydraulic brakes, this simplification of valve 37 may be used to advantage.

A quick reaction to the orders of the sensor system 7, 8 is of extreme importance for the efficiency of the hole system. It is important that motor 10 starts quickly. If it appears that the motor of a modulator in a certain vehicle does not start sufficiently quickly, it is possible to start the motor, e.g. via the stop lamp switch of the braking system, as soon as braking is performed so that the motor is ready in case the sensor system emits an order to reduce the braking oil pressure. It is well-known that the stop lamp switch closes the current circuit at very low braking oil pressures. If the motor is considered in this way to be started unnecessarily often, another pressure-sensitive switch may be introduced starting the motor (motors, because a system for a complete motor car may comprise several modulators) at a higher braking oil pressure such as 15 bar which is a braking oil pressure at which no risk of wheel lock exists for most vehicles irrespective of how bad the road condition is.

In order to save current and not unnecessarily wear out the modulators such a preparedness start may be performed via a suitable resistor.

One way of holding the motors going during a braking process controlled by the modulator, in spite of the fact that the sensor system during such a process with certain intervals of time interrupts the current supply to the motor, involves use of an electronic holding circuit (RC-circuit) to retain current supply to the motors in spite of the fact that the sensor system has interrupted the current supply. This holding time does not have to be longer than the periods of time during a controlled braking process during which the motor current is interrupted, which normally is a question of some tenths of a second.

It is also extremely essential that valves 37, 38 react very quickly on the sensor signals both as far as attraction is concerned when current is supplied to solenoids 47 and after release when the supply of current to the solenoids has been interrupted. As a rule, no difficulties are encountered as far as quick attraction is concerned—this is a question of providing sufficiently strong solenoids 47 with many ampere turns. More pronounced difficulties are encountered in causing cores 52 to be released when current supply is broken and, unfortunately, these difficulties become more pronounced the stronger the magnetic flow produced by solenoids 47 is.

Hereafter three variants of devices offering solutions of this problem shall be explained by reference to Fig. 13 showing amperage (I) as a function of time (T). The common feature of the three arrangements is that a very powerful solenoid 47 is used in which a very high amperage would be achieved if the chosen net voltage is permitted to act for a sufficiently long time. Such a process is shown by the thick full line (a) in Fig. 13.

One way involves inserting a resistor in series with solenoids 47. A transistor is shunted over the connections of this resistor to short-circuit the resistor upon reception of a control signal. This control signal is derived from an induction coil wound on the same coil support 48 as solenoids 47. When current is supplied to solenoids 47 it passes during the first moments through the resistor. This is shown in Fig. 13 by the dot-and-dash line (0) to (b'). Hereby a control current is induced causing the transistor to short-circuit the resistor, whereafter the solenoid 47 is exposed to full voltage causing the amperage to be built up very quickly as shown in Fig. 13 by the dot-and-dash line (b') to (b''). When the current passing through the solenoid approaches the steady-state value the time derivate of the amperage is reduced so that the induced control current is weakened to such an extent as to become unable to hold the transistor closed whereby the resistor is cut in again. Thereby the current flow in the induction coil controlling the transistor is reduced causing the transistor again to interrupt and the resistor to be inserted again into the circuit. The current flow through solenoid 47 is then strongly reduced according to the dot-and-dash line (b'') to (b'''), to continue on a constant level. The strength of the magnetic field produced by the solenoid quickly fades-out to a level which is just sufficient to hold core 52 in the attracted position. It will be appreciated that core 52 under the action of spring 53 very quickly returns to its starting position when the current supply to the solenoid is interrupted. The great advantage of this arrangement in comparison with the two arrangements to be described hereafter resides in the fact that it performs a so-called sequence control in such a way that the restriction of the amperage does not take place before core 52 (in Fig. 14: 152) actually has been pulled over its entire stroke-length.

Similar result may be obtained by electrical "solid-state" circuits controlled by commercially available electronic "chips".

"Chips" are available which permit the current to pass without hindrance when the current is supplied during a short, predetermined period of time. The evolution of the current follows the full line from (0) to (a'). After expiration of this period of time, in this connection some milliseconds, a so-called "chopper" included in the "chip" chops the current to form a pulsating direct current the mean voltage of which is determined by the interrelation between the periods in which the current is respectively broken and closed. The current then goes down along the fine full line from (a') to (c') whereafter the amperage remains on a constant level. The preprogrammed period of time is so adapted that core 52, alternatively 152, has been attracted before the current is restricted.

On certain fields of use of modulators a "chip" forming a current limiter may be sufficient. When current supply to the solenoid is started the current may pass unhampered until it approaches at (d') a predetermined amperage whereafter the current is held constant at this amperage. The continued process is illustrated by the broken line (d). The predetermined amperage is so adapted that the core 52, alternatively 152, has been attracted prior to the restriction of the current.

It will appear from the preceding explanation that this invention has a very wide applicability. The drawbacks observed in previously known systems are completely eliminated.

The experts on the field to which the invention belongs will appreciate that the invention may be varied and modified within the frame of the attached claims without deviation from the basic idea of the invention such as it is expressed in the attached claims.

**Claims**

1. Braking force modulator (1) for hydraulic vehicle brakes intended to be inserted into the brake fluid conduit (2) between a brake fluid pressure generator (3) and the wheel braking cylinder (5) in question and to be controlled by a sensor system (7, 8), said modulator (1) comprising a piston pump unit (12) having spring-biased inlet and outlet check valves (37, 38) which normally are held open by return springs (53) and electromagnetic means (47, 48, 49, 52) which during actuation close the inlet and outlet valves (37, 38) thereby conditioning the device to act as a piston pump for returning brake fluid to the brake fluid pressure generator (3), characterized in that the inlet and outlet valves (37, 38) constitute two mutually independent units which are operable separately by means of individual electromagnetic means (47, 48, 49, 52), that the valves are two-step valves comprising a primary valve (54) having small through-flow area and having its seat provided in a secondary valve (59) having considerably larger through-flow area, and having its seat provided in an insert (58), and that the electromagnetic means (47, 48, 49, 52) and the primary valve (54) are placed on the same side of the seat of the secondary valve (59) in the insert (58) as the secondary valve (59).

2. Braking force modulator as claimed in Claim 1, characterized in that the valves (37, 38) are so positioned in relation to each other and to the pumping chamber of the pumping unit (12) that this chamber forms a part of the brake fluid conduit through the modulator.

3. Braking force modulator as claimed in Claim 1 or 2, characterized in that the electromagnetic means are solenoids (47, 48, 49, 52).

4. Braking force modulator as claimed in Claim 3, characterized in that the sensor system (7, 8) controls the current supply to the solenoids (47, 48, 49, 52) of both valves (37, 38) for simultaneous operation of the valves (37, 38).

5. Braking force modulator as claimed in either Claim 3 or Claim 4, characterized in that the sensor system (7, 8) controls the supply of current to the solenoids (47, 48, 49, 52) of both valves (37, 38) for separate operation of either valve (37, 38).

6. Braking force modulator as claimed in any of the preceding Claims 3—5, characterized in that each return spring (53) is positioned over a core (52, 152) of the respective solenoid (47, 48, 49, 52) and is only able to separate the primary valve (54) from its seat in the secondary valve (59).

7. Braking force modulator as claimed in Claim 6, characterized in that the core (152) is provided with hook-shaped elements (66) limiting the movement of the secondary valve (59) away from the core (152) and enabling the secondary valve (59) to be separated from its seat in the insert (158).

8. Braking force modulator as claimed in any of the preceding claims 3—7, characterized in that at least one of the valves (37, 38) is provided with a check valve (40) controlled by one of the solenoids (47, 48, 49, 52) which when the solenoid is not actuated is lifted from its seat in a support plate (42) and then has a certain through-flow area but when the solenoid is actuated has a considerably reduced through-flow area while the check valve (40) is in contact with its seat in the support plate (42).

9. Braking force modulator as claimed in any of the preceding Claims 3—8, characterized in that the winding (47) of the solenoids (47, 48, 49, 52) in the valves (37, 38) is dimensioned for high amperage in the steady state when the chosen net voltage is applied and that devices are attached in series with the solenoid windings (47) preventing the amperage from reaching the steady-state value.

10. Braking force modulator as claimed in Claim 9, characterized in that the device for limiting the amperage in the solenoid windings (47) comprises an ohmic resistor connected in series with the windings (47) and adapted to be short-circuited by a transistor shunted with the resistor and obtaining its control current from an induction coil wound in association with the solenoid windings (47).

11. Braking force modulator as claimed in Claim 9, characterized in that the device for limiting the amperage in the solenoid windings (47) comprises a semiconductor element connected in series with the windings (47) and adapted, after a certain pre-programmed period of time to let a so-called chopper inserted into the semi-conductor element chop the current to form a high-frequency pulsating direct current, the mean voltage of which is adapted to limiting the current through the solenoid windings (47) to a suitable value.

12. Braking force modulator as claimed in Claim 9, characterized in that the device for limiting the amperage in the solenoid windings (47) comprises a semi-conductor element connected in series with the windings (47) and locking the amperage at a certain pre-programmed level as soon as this level has been reached.

13. Braking force modulator as claimed in any of the preceding Claims, characterized in that the motor (10) of the piston pump unit (12) is supplied with current via a switch controlled by the applied brake fluid pressure.

14. Braking force modulator as claimed in Claim 13, characterized in that the motor (10) of the pumping unit (12) by means of a semi-conductor circuit (RC-circuit) is supplied with current during a short time subsequent to the sensor system (7, 8) having transmitted an order to terminate a down-pumping phase in a controlled braking process.

15. Braking force modulator as claimed in any of the preceding Claims, characterized in that it comprises several circuits comprising pumping pistons (11, 12) and valves (37, 38) in which the pumping pistons (11, 12) are driven by one and the same motor (10), the pistons (11, 12) receiving their oscillating movement from one and the same eccentric device (13, 14, 15).

16. Braking force modulator as claimed in Claim 15, characterized in that the pumping pistons (11, 12) have different stroke volumes.

17. Braking force modulator as claimed in Claim 15 or 16, characterized in that the ends of the pistons (11, 12) facing an eccentric strap (15) of the eccentric device (13, 14, 15) are provided with spherical recesses, that corresponding spherical recesses are provided in the periphery of the eccentric strap (15) and that balls (16, 17) of lesser radius than the spherical recesses are inserted between each piston and the eccentric strap (15) in the spherical recesses.

**Patentansprüche**

1. Bremskraftmodulator (1) für hydraulische Fahrzeugbremsen, der in die Bremsleitung (2) zwischen einem Bremsflüssigkeitsdruckgenerator (3) und dem betreffenden Radbremszylinder (5) einsetzbar und durch ein Sensorsystem (7, 8) steuerbar ist, wobei der Bremskraftmodulator (1) eine Kolbenpumpeneinheit (12) umfaßt, die federbelastete Einlaß- und Auslaßprüfventile (37, 38) aufweist, die normalerweise durch Rückholfedern (53) in Öffnungsstellung gehalten sind, sowie elektromagnetische Mittel (47, 48, 49, 52), die während der Betätigung die Einlaß- und Auslaßventile (37, 38) schließen und dadurch die Vorrichtung in die Lage versetzen, als Kolbenpumpe zur Rückführung von Bremsflüssigkeit zu dem Bremsflüssigkeitsdruckgenerator (3) zu wirken, dadurch gekennzeichnet, daß die Einlaß- und Auslaßventile (37, 38) zwei voneinander unabhängige Einheiten bilden, die durch individuelle elektromagnetische Mittel (47, 48, 49, 52) separat betätigbar sind, daß diese Ventile (37, 38) Zweistufenventile sind, die ein Primärventilelement (54) mit kleinem Durchflußquerschnitt umfassen, dessen Sitz in einem Sekundärventilelement (59) angeordnet ist, das einen wesentlich größeren Durchflußquerschnitt besitzt und dessen Sitz in einem Einsatzteil (58) angeordnet ist, und daß die elektromagnetischen Mittel (47, 48, 49, 52) und das Primärventilelement (54) auf derselben Seite des Sitzes des Sekundärventilelements (59) in dem Einsatzteil (58) angeordnet sind wie das Sekundärventilelement (59).

2. Bremskraftmodulator nach Anspruch 1, dadurch gekennzeichnet, daß die Ventile (37, 38) relativ zueinander und zu der Pumpkammer der Pumpeinheit (12) derart positioniert sind, daß diese Kammer einen Teil der Bremsflüssigkeitsleitung durch den Bremskraftmodulator bildet.

3. Bremskraftmodulator nach Anspruch 1 oder 2, dadurch gekennzeichnet, daß die elektromagnetischen Mittel Solenoide (47, 48, 49, 52) sind.

4. Bremskraftmodulator nach Anspruch 2, dadurch gekennzeichnet, daß das Sensorsystem (7, 8) die stromzufuhr zu den Solenoiden (47, 48, 49, 52) beider Ventile (37, 38) derart steuert, daß die Ventile (37, 38) gleichzeitig betätigbar sind.

5. Bremskraftmodulator nach einem der Ansprüche 3 oder 4, dadurch gekennzeichnet, daß das Sensorsystem (7, 8) die Stromzufuhr zu den Solenoiden (47, 48, 49, 52) beider Ventile (37, 38) derart steuert, daß jedes der Ventile (37, 38) getrennt betätigbar ist.

6. Bremskraftmodulator nach einem der Ansprüche 3 bis 5, dadurch gekennzeichnet, daß jede Rückholfeder (53) über einem Kern (52, 152) des betreffenden Solenoids (47, 48, 49, 52) angeordnet ist und nur das Primärventilelement (54) von seinem Sitz in dem Sekundärventilelement (59) trennen kann.

7. Bremskraftmodulator nach Anspruch 6, dadurch gekennzeichnet, daß der Kern (152) mit hakenförmigen Elementen (66) versehen ist, die die von dem im Kern (152) wegführende Bewegung des Sekundärventilelements (59) begrenzen und ein Lösen des Sekundärventilelements (59) von sinem Sitz in dem Einsatzteil (158) ermöglichen.

8. Bremskraftmodulator nach einem der Ansprüche 3 bis 7 dadurch gekennzeichnet, daß wenigstens eines der Ventile (37, 38) mit einem von einem der Solenoide (47, 48, 49, 52) gesteuertes Prüfventil (40) aufweist, das bei nichtbetätigtem Solenoid von seinem Sits in einer Trägerplatte (42) abgehoben ist und dann einem bestimmten Durchflußquerschnitt besitzt, wenn der Solenoid jedoch betätigt ist, einen wesentlich geringeren Durchflußquerschnitt besitzt, während es mit seinem Sitz in der Trägerplatte (42) in Kontakt steht.

9. Bremskraftmodulator nach einem der Ansprüche 3 bis 8, dadurch gekennzeichnet, daß die Wicklung (47) der Solenoide (47, 48, 49, 52) in den Ventilen (37, 38) derart dimensioniert ist, daß im stationären Zustand, wenn die gewählte Netzspannung angelegt wird, hoher Strom fließt, und daß in Reihe zu dem Solineoid-Wicklungen (47) Vorrichtungen angeordnet sind, die verhindern, daß der Stromfluß den stationären Wert erreicht.

10. Bremskraftmodulator nach Anspruch 9, dadurch gekennzeichnet, daß die Vorrichtung zur Begrenzung des Stroms in den Solenoidwicklungen (47) einen mit den Wicklungen (47) in Reihe geschalteten Ohmschen Widerstand umfaßt, der durch einen zu dem Widerstand parallel geschalteten Transistor kurzschließbar ist, dessen Steuerstrom aus einer Induktionsspule stammt, die zusammen mit den Solenoidwicklungen (47) aufgewickelt ist.

11. Bremskraftmodulator nach Anspruch 9, dadurch gekennzeichnet, daß die Vorrichtung zur Begrenzung des Stroms in den Solenoidwicklungen (47) ein zu den Wicklungen (47) in Reihe geschaltes Halbleiterelement umfaßt, das nach einer bestimmten vorprogrammierten Zeitspanne einen in dem Halbleiterelement eingesetzten Zerhacker wirksam werden läßt, der den Strom zu einem hochfrequenten pulsierenden Gleichstrom zerhackt, dessen Spannungsmittelwert so bemessen ist, daß durch die Solenoidwicklungen (47) fliessende Strom auf einen geeigneten Wert begrenzt wird.

12. Bremskraftmodulator nach Anspruch 9, dadurch gekennzeichnet, daß die Vorrichtung zur Begrenzung des Stromflusses in den Solenoidwicklungen (47) ein Halbleiterelement umfaßt, das mit den Wicklungen (47) in Reihe geschaltet ist und den Stromfluß bei Erreichen eines bestimmten vorprogrammierten Pegels blockiert.

13. Bremskraftmodulator nach einem der vorhergehenden Ansprüche, dadurch gekennzeichnet, daß der Motor (10) der Kolbenpumpeneinheit (12) über einen von dem herrschenden Bremsflüssigkeitsdruck gesteuerten Schalter mit Strom versorgt wird.

14. Bremskraftmodulator nach Anspruch 13, dadurch gekennzeichnet, daß eine Halbleiterschaltung (RC-Schaltung) vorgesehen ist, die den Motor (10) der Pumpeneinheit (12) nach dem Zeitpunkt, in dem das Sensorsystem (7, 8) einen Befehl zur Beendigung einer Herabpumpphase in einem gesteuerten Bremsvorgang ausgesendet hat, kurzzeitig mit Strom versorgt.

15. Bremskraftmodulator nach einem der vorgehenden Ansprüche, dadurch gekennzeichnet, daß mehrere Kreise mit Pumpenkolben (11, 12) und Ventilen (37, 38) vorgesehen sind, in denen die Pumpenkolben (11, 12) von ein und demselben Motor (10) angetrieben sind und die Kolben (11, 12) durch ein und dieselbe Exzentervorrichtung (13, 14, 15) mit einer oszillierenden Bewegung beaufschlagt werden.

16. Bremskraftmodulator nach Anspruch 15, dadurch gekennzeichnet, daß die Pumpenkolben (11, 12) unterschiedlich Hubvolumina haben.

17. Bremskraftmodulator nach Anspruch 15 oder 16, dadurch gekennzeichnet, daß die einem Exzenterkopf (15) der Exzentervorrichtung (13, 14, 15) zugewandten Enden der Kolben (11, 12) mit sphärischen Ausnehmungen versehen sind, daß in der Peripherie des Exzenterkopfes (15) entsprechende sphärische Ausnehmungen vorgesehen sind und daß zwischen jedem Kolben und dem Exzenterkopf (15) in den sphärischen Ausnehmungen Kugeln (16, 17) angeordnet sind, deren Radius kleiner ist als derjenige der sphärischen Ausnehmungen.

**Revendications**

1. Modulateur de force de freinage (1) pour frein hydraulique de véhicule de véhicule destiné à être placé dans le conduit de fluide de freinage (2) entre un générateur de pression de fluide de frein (3) et le cylindre de freinage de roue (5) en question et destiné à être commandé par un système détecteur (7, 8), ledit modulateur (1) comprenant une unité de pompe ä piston (12) ayant des clapets de retenue d'entrée et de sortie (37, 38) sollicités par ressort et qui sont normalement maintenus ouverts par des ressorts de rappel (53) et des moyens électromagnétiques (47, 48, 49, 52) qui lors de leur mise en action ferment les clapets d'entrée et de sortie (37, 38) ce qui met le dispositif en condition pour agir en tant que pompe à piston afin de retourner du fluide de freinage vers le générateur de pression de fluide de freinage (3), caractérisé en ce que les clapets d'entrée et de sortie (37, 38) constituent deux unités indépendantes l'une de l'autre qui sont commandables séparément au moyen de moyens électromagnètiques individuels (47, 48, 49, 52), en ce que les clapets sont des clapets à deux étages comprenant un clapet primaire (54) ayant une section de passage faible et dont le siège est ménagé dans un clapet secondaire (59) ayant une section de passage considérablement plus grande et dont le siège est ménagé dans une pièce rapportée (58) et en ce que les moyens électromagnétiques (47, 48, 49, 52) et le clapet primaire (54) sont placés du même côté du siège du clapet secondaire (59) dans la pièce rapportée (58) que le clapet secondaire (59).

2. Modulateur de force de freinage suivant la revendication 1, caractérisé en ce que les clapets (37, 38) sont placés l'un par rapport à l'autre et par rapport à la chambre de pompage de l'unite de pompage (12) de telle façon que cette chambre constitue une partie du conduit de fluide de freinage à travers le modulateur.

3. Modulateur de force de freinage suivant la revendication 1 ou 2, caractérisé en ce que les moyens électromagnétiques sont des solénoïdes (47, 48, 49, 52).

4. Modulateur de force de freinage suivant la revendication 3, caractérisé en ce que le système de détection (7, 8) commande l'alimentation en courant des solénoïdes (47, 48, 49, 52) des deux clapets (37, 38) en vue d'une mise en action simultanée des clapets (37, 38).

5. Modulateur de force de freinage suivant la revendication 3 ou 4, caractérisé en ce que le système détecteur (7, 8) commande l'alimentation en courant des solénoïdes (47, 48, 49, 52) des deux clapets (37, 38) pour un fonctionnement séparé de l'une ou l'autre des clapets (37, 38).

6. Modulateur de force de freinage suivant l'une quelconque des revendications précédentes 3 à 5, caractérisé en ce que chaque ressort de rappel (53) est placé sur un noyau (52, 152) du solénoïde respectif (47, 48, 49, 52) et est uniquement capable de séparer le clapet primaire (54) de son siège dans le clapet secondaire (59).

7. Modulateur de force de freinage suivant la revendication 6, caractérisé en ce que le noyau (152) est muni d'éléments en forme de crochet (66) qui limitent le déplacement du clapet secondaire (59) à partir du noyau (152) tout an permettant au clapet secondaire (59) de se séparer de son siège dans la pièce rapportée (158).

8. Modulateur de force de freinage suivant l'une quelconque des revendications précédentes 3 à 7, caractérisé en ce que l'un au moins des clapets (37, 38) est muni d'un clapet de retenue (40) commandé par l'un des soléno:des (47, 48, 49, 52) qui, lorsque le solénoïde n'est pas excité, est soulevé de son siège dans une plaque support (42) et présente alors une certaine section de passage mais qui, lorsque le solénoïde est excité, présente une section de passage considérablement réduite alors que le clapet (40) est en contact avec son siège dans la plaque support (42).

9. Modulateur de force de freinage suivant l'une quelconque des revendications précédentes 3 et 8, caractérisé en ce que le bobinage (47) des solénoïdes (47, 48, 49, 52) dans les clapets (37, 38) est dimensionné pour une intensité élevée à l'état permanent lorsque la tension nette choisie est appliqué et en ce que les dispositifs sont montés en série avec les bobinages des solénoïdes (47) pour empêcher l'intensité d'atteindre la valeur de régime permanent.

10. Modulateur de force de freinage suivant la revendication 9, caractérisé en ce que le dispositif destiné à limiter le courant dans les bobinages de solénoïde (47) comprend une résistance ohmique connectée en série avec les bobinages (47) et prévue pour être court-circuitée par un transistor shunté par la résistance et dont le courant de commande provient d'un enroulement d'induction bobiné en association avec les bobinages (47) du solénoïde.

11. Modulateur de force de freinage suivant la revendication 9, caractérisé en ce que le dispositif pour limiter le courant dans les bobinages de solénoïde (47) comprend un élément semi-conducteur connecté en série avec les bobinages (47) et prévu, après un certain intervalle de temps préprogrammé, de provoquer le découpage du courant par un hacheur inséré dans l'élément semi-conducteur de façon à former un courant continu pulsé à haute fréquence, dont la tension moyenne est adaptée pour limiter à une valeur appropriée le courant qui traverse les bobinages de solénoïde (47).

12. Modulateur de force de freinage suivant la revendication 9, caractérisé en ce que le dispositif destiné à limiter le courant dans les bobinages de solénoïde (47) comprend un élément semi-conducteur connecté en série avec les bobinages (47) et maintenant le courant à un certain niveau préprogrammé dès que ce niveau est atteint.

13. Modulateur de force de freinage suivant l'une quelconque des revendications précédentes, caractérisé en ce que le moteur (10) de l'unite de pompe à piston (12) est alimenté en courant par l'intermédiaire d'un interrupteur commandé par la pression de fluide de freinage appliqué.

14. Modulateur de force de freinage suivant la revendication 13, caractérisé en ce que le moteur (10) de l'unité de pompage (12) est limité en courant par l'intermédiaire d'un circuit semi-conducteur (circuit RC) au cours d'un intervalle de temps court après que le système de détection (7, 8) ait émis un ordre de mettre fin à une phase de repompage au cours d'un processus de freinage contrôlé.

15. Modulateur de force de freinage suivant l'une quelconque des revendications précédentes, caractérisé en ce qu'il comprend plusieurs circuits comprenant des pistons de pompage (11, 12) et des clapets (37, 38) dans lesquels les pistons de pompage (11, 12) sont entraînés par le même moteur (10), les pistons (11, 12) recevant leur mouvement d'oscillation à partir du même dispositif à excentrique (13, 14, 15).

16. Modulateur de force de freinage suivant la revendication 15, caractérisé en ce que les pistons de pompage (11, 12) ont des cylindrées différentes.

17. Modulateur de force de freinage suivant la revendication 15 ou 16, caractérisé en ce que les extrémités des pistons (11, 12) en regard d'un excentrique (15) du dispositif à excentrique (13, 14, 15) sont munis d'évidements sphériques, en ce que des évidements sphériques correspondants sont ménagés à la périphérie de l'excentrique (15) et en ce que des billes (16, 17) de rayon plus faible que celui des évidements sphériques sont placées entre chaque piston et l'excentrique (15) dans les évidements sphériques.

Fig. 2

Fig. 12

Fig. 1

Fig. 3

0 140 863

2

0 140 863

## Fig.4

## Fig.5

III-III

## Fig.6

IV-IV

## Fig. 7

V-V

3

Fig. 13

Fig. 8

Fig. 11

Fig. 9

Fig. 10

Fig. 14

55
54
152
66
59
67
158